# EUROPÄISCHE PATENTSCHRIFT

(11) **EP 4 158 432 B1**
(45) Veröffentlichungstag und Bekanntmachung des Hinweises auf die Patenterteilung: **27.08.2025**
(21) Anmeldenummer: 21745923.9
(22) Anmeldetag: 05.07.2021
(51) Int. Cl.: G05B 19/418, G06K 19/06

(54) **HERSTELLUNGSVERFAHREN FÜR FÄLSCHUNGSSICHERE MASCHINENKOMPONENTEN**
METHOD OF PRODUCTION FOR TAMPER-PROOF MACHINE COMPONENTS
PROCÉDÉ DE FABRICATION DE PIÈCES MÉCANIQUES INFALSIFIABLES

(30) Priorität: 31.08.2020 DE 102020006772
(43) Veröffentlichungstag der Anmeldung: 05.04.2023
(73) Patentinhaber: Siemens Aktiengesellschaft, 80333 München (DE)
(72) Erfinder: BRETSCHNEIDER, Jochen, 88696 Owingen (DE); FRERKING, Björn, 90419 Nürnberg (DE); SEEGER, Guido, 91083 Baiersdorf (DE)
(74) Vertreter: Siemens Patent Attorneys
(86) Internationale Anmeldenummer: PCT/EP2021/068447
(87) Internationale Veröffentlichungsnummer: WO 2022/042914

(56) Entgegenhaltungen:
- EP-A1- 3 340 213
- EP-A1- 3 696 630
- WO-A1-2014/206476
- US-A1- 2014 139 608

## Beschreibung

Die Erfindung betrifft ein Verfahren zum Herstellen von Maschinenkomponenten, für die Fälschungssicherheit angestrebt ist. Die Erfindung betrifft auch ein Verfahren zum Prüfen der Echtheit von entsprechenden Maschinenkomponenten. Ebenso betrifft die Erfindung eine derart hergestellte Maschinenkomponente und ein Computerprogrammprodukt zum entsprechenden Steuern einer Werkzeugmaschine. Des Weiteren betrifft die Erfindung eine Steuereinheit für eine Werkzeugmaschine, die über ein solches Computerprogrammprodukt verfügt.

Die Europäische Patentanmeldung EP 3 340 213 A1 offenbart ein Verfahren zum fälschungssicheren Herstellen einer Ware bekannt, bei dem eine physikalisch nicht-klonbare Funktion eingesetzt wird. Die physikalisch nicht-klonbare Funktion kann als eine Mikrostruktur ausgebildet sein, die in der Ware selbst vorliegt oder darin eingearbeitet wird. Eine kryptographische Hash-Funktion wird mit Daten kombiniert, die sich als Reaktion auf die physikalisch nicht-klonbare Funktion ergeben und digital signiert. Druckschrift EP 3 696 630 A1 offenbart offenbart die Bildung eines Strichcodes auf der Oberfläche eines Werkstücks während der Bearbeitung des Werkstücks.

Aus der chinesischen Patentanmeldung CN 110253148 A ist ein Verfahren bekannt, in dem Werkstücke mit einem Laser bestrahlt werden, um so eine Oberflächenkennung zu erzeugen. Der Laser wird mit zufälligen Betriebsparametern angesteuert, so dass eine korrespondierend ausgestaltete Oberflächenkennung erzeugt wird. Diese wiederum stellt ein de facto einzigartiges Identifikationsmerkmal dar.

In einer Vielzahl an Anwendungsgebieten kommen sicherheitsrelevante Maschinenkomponenten zum Einsatz, durch die kritische Funktionen bereitgestellt werden und die in vielen Fällen stark reguliert sind. Gleichzeitig treten in zahlreichen dieser Anwendungsgebiete unautorisierte Anbieter auf, die Imitate solcher Maschinenkomponenten in den Verkehr bringen. Dies ist beispielsweise der Fall bei luftfahrtzugelassenen Komponenten. Es besteht somit Bedarf an einer Möglichkeit, solche unautorisierten Imitate von legitimen Maschinenkomponenten zuverlässig zu unterscheiden. Gleichzeitig wird angestrebt, hierzu geeignete technische Maßnahmen einfach und kosteneffizient umzusetzen. Der Erfindung liegt die Aufgabe zugrunde, eine technische Lösung bereitzustellen, die in zumindest einem der skizzierten Punkte eine Verbesserung bietet.

Die Aufgabenstellung wird durch ein erfindungsgemäßes Verfahren zum Herstellen einer Maschinenkomponente gelöst, deren Echtheit nachprüfbar zu sein hat. Das Verfahren geht von einem Werkstück aus, das zu der Maschinenkomponente zu verarbeiten ist, und das zu Beginn des Verfahrens bereitzustellen ist. Das Verfahren umfasst einen ersten Schritt, in dem eine Bemaßung einer zu bearbeitenden Oberfläche des Werkstücks erfasst wird. Dazu kann beispielsweise eine CAD-Information über die Maschinenkomponente ausgelesen werden und/oder ein Teileprogramm einer Werkzeugmaschine ausgewertet werden. Die Bemaßung kann als jegliche Angabe ausgebildet sein, die eine durch die Bearbeitung dauerhaft veränderbare Eigenschaft des Werkstücks betrifft, beispielsweise eine Längenangabe, eine Oberflächenrauigkeit, eine Welligkeit, eine Planarität, einen Radius, einen Winkel, oder ähnliches sein. Mit der Bemaßung wird auch eine zugehörige Toleranzspanne erfasst. Die Toleranzspanne ist analog zur Bemaßung ermittelbar und/oder aus allgemeinen Toleranzangaben zur herzustellenden Maschinenkomponente ermittelbar. Durch die Toleranzspanne wird ein Spielraum vorgegeben, der für ein Signaturmuster nutzbar ist.

In einem zweiten Schritt erfolgt ein Erzeugen des Signaturmusters für die zu bearbeitende Oberfläche. Das Signaturmuster ist individualisiert, beispielsweise je Werkstück oder je Werkstückcharge. Das Signaturmuster ist eine Abweichung der herzustellenden Oberfläche von einem Nennmaß, das durch die im ersten Schritt erfasste Bemaßung vorgegeben wird. Dazu kann das Signaturmuster beispielsweise als Relief ausgebildet sein. Das Signaturmuster ist ein Identifikationsmerkmal, durch das eine Echtheit der Maschinenkomponente zu überprüfen ist. In einem dritten Schritt erfolgt ein formgebendes Bearbeiten des Werkstücks zumindest an der zu bearbeitenden Oberfläche, wobei diese auf die im ersten Schritt erfasst Bemaßung zu bringen ist. Dabei wird an der zu bearbeitenden Oberfläche auch das Signaturmuster hergestellt. Dementsprechend ist das Signaturmuster in der Maschinenkomponente in eine seiner Konturen eingebettet.

Das Verfahren umfasst auch einen vierten Schritt, in dem ein Prüfcode ermittelt wird und das Werkstück mit diesem versehen wird. Der Prüfcode wird im Zuge einer formgebenden Bearbeitung an einer auslesbaren Stelle auf dem Werkstück angebracht. Erfindungsgemäß weist das Signaturmuster, das am Werkstück ausgebildet wird, Maximalabmessungen auf, die innerhalb der Toleranzspanne liegen. Dadurch weist das Signaturmuster reduzierte Abmessungen auf und ist dadurch nur aufwendig zu entdecken. Ferner wird die Toleranzspanne an der entsprechenden Oberfläche der Maschinenkomponente weiterhin eingehalten, so dass diese mit gleichbleibender Güte herstellbar sind. Das Signaturmuster und der Prüfcode erlauben es, die Echtheit der Maschinenkomponente, die aus dem Werkstück herzustellen ist, zu prüfen. Die Schritte des Verfahrens können sequentiell oder zumindest teilweise gleichzeitig durchgeführt werden.

Erfindungsgemäß ist das Signaturmuster als Welligkeit an der Oberfläche des Werkstücks ausgebildet. Um als Signaturmuster zu dienen kann die Welligkeit beispielsweise in puncto Frequenz, Amplitude und/oder der Anzahl an Wellen variiert werden. Gezielt erzeugte Welligkeiten sind nur mit besonderem Aufwand von zufällig auftretenden Welligkeiten an einer Oberfläche zu unterscheiden. Eine als Welligkeit ausgebildete Signaturfläche ist folglich für einen unautorisierten Anbieter kaum zu entdecken, wodurch jeglicher Versuch, das beanspruchte Verfahren zu imitieren, weiter erschwert wird. Insgesamt wird das erfindungsgemäße Verfahren so um eine steganographische Komponente verstärkt.

In einer Ausführungsform des beanspruchten Verfahrens ist das formgebende Bearbeiten des Werkstücks als spanendes Bearbeiten ausgebildet. Spanendes Bearbeiten ist beispielsweise mit Werkzeugmaschinen durchführbar, die ein erhöhtes Maß an Fertigungspräzision bieten. Das spanende Bearbeiten kann beispielsweise ein Fräsen, Drehen, Bohren, oder eine Kombination hieraus sein. Das Signaturmuster ist so beispielsweise durch einen Fräser präzise herstellbar, wodurch das Signaturmuster wiederum bei einer Echtheitsprüfung eindeutig erfassbar ist. Dementsprechend ist das beanspruchte Verfahren dazu geeignet, eine zuverlässige Echtheitsprüfung vom Maschinenkomponenten durchzuführen. Alternativ oder ergänzend kann das formgebende Bearbeiten auch als additive Fertigung, beispielsweise 3D-Druck, oder als ablative Fertigung, beispielsweise Ätzen oder Laserschneiden, ausgebildet.

Des Weiteren kann der Prüfcode im beanspruchten Verfahren in Abhängigkeit vom Signaturmuster erzeugt werden. Dazu kann das Signaturmuster ausgewählt werden und als Eingabewerte für einen Algorithmus genutzt werden, der daraus einen herzustellenden zugehörigen Prüfcode erzeugt. Dadurch wird ein rechnerisch nachvollziehbarer Zusammenhang zwischen dem Signaturmuster und dem Prüfcode hergestellt. Eine Verifikationsdatenbank, die jedes Signaturmuster und den zugehörigen Prüfcode protokolliert, ist deshalb entbehrlich. Ebenso sind Prüfcodes während der Fertigung der Maschinenkomponenten erzeugbar. Das beanspruchte Verfahren erlaubt eine dezentrale Echtheitsprüfung für entsprechend hergestellten Maschinenkomponenten durchzuführen. Folglich ist das beanspruchte Verfahren mit reduziertem Aufwand auf eine im Wesentlichen beliebig hohe Anzahl an Maschinenkomponenten skalierbar, wodurch sich ein breites Einsatzspektrum erschließt.

Darüber hinaus kann der Prüfcode zumindest teilweise basierend auf dem Signaturmuster in Kombination mit einem privaten Schlüssel vorgegeben werden. Darunter ist ein privater Schlüssel im Sinne eines asymmetrischen Kryptosystems zu verstehen. So ist ein Prüfcode erzeugbar, von dem allein ausgehend nur unter enormem Aufwand rechnerisch auf das Signaturmuster zurückschließbar ist. Dadurch wird ein unautorisiertes Produzieren eines neuen Paars mit einem Prüfcode und einem konsistenten Signaturmuster erschwert. Das beanspruchte Verfahren erlaubt es so, die technischen Vorzüge eines asymmetrischen Kryptosystems für die Herstellung von Maschinenkomponenten zu nutzen. Alternativ oder ergänzend kann der Prüfcode auch basierend auf dem Signaturmuster in Kombination mit einem privaten Algorithmus erzeugt werden. Unter einem privaten Algorithmus ist hierbei, korrespondierend zu einem privaten Schlüssel, ein Erzeugungsalgorithmus für den Prüfcode zu verstehen, zu dem nur autorisierte Benutzer des beanspruchten Verfahrens Zugriff haben. Der private Algorithmus kann ein hohes Maß an Komplexität aufweisen, wodurch unautorisierte Versuche, diesen zu rekonstruieren, weiter erschwert werden. Weiter alternativ oder ergänzend können auch ein privater Schlüssel und ein privater Algorithmus gemeinsam in Kombination mit dem Signaturmuster genutzt werden, um den Prüfcode zu erzeugen.

In einer weiteren Ausführungsform des beanspruchten Verfahrens kann das Signaturmuster auch ein diskretes Relief aufweisen, das an der Oberfläche des Werkstücks ausgebildet ist. Ein diskretes Relief, beispielsweise ein Streifenmuster oder ein Mosaikmuster, bietet ein weites Spektrum an möglichen Signaturmustern, so dass das Verfahren wiederholungsfrei auf eine hohe Anzahl an Werkstücken anwendbar ist. Diskrete Reliefs sind optisch exakt erfassbar, wodurch die Zuverlässigkeit bei der angestrebten Echtheitsprüfung weiter gesteigert wird. Ebenso kann nur ein begrenzter Teil des so möglichen Spektrums an möglichen Signaturmustern genutzt werden. Dadurch wird die Wahrscheinlichkeit reduziert, dass ein unautorisierter Anbieter von Imitaten ein zulässiges Signaturmuster errät. Hierdurch wird die Aussagekraft einer Echtheitsprüfung einer entsprechenden Maschinenkomponente weiter gesteigert.

Im beanspruchten Verfahren kann der Prüfcode auch basierend auf einer einstellbaren Zusatzinformation erzeugt werden. Die Zusatzinformation ist beispielsweise durch einen Benutzer oder einen Algorithmus erzeugbar. Dies kann eine Zeichenkette sein, die als zusätzliche Eingabe beispielsweise für den privaten Schlüssel und/oder den privaten Algorithmus verwendbar ist. Insbesondere kann die einstellbare Zusatzinformation Angaben über die Maschinenkomponente selbst umfassen, beispielsweise deren Bezeichnung, Seriennummer, Hersteller, Herstellungsdatum, Herstellungsort, den ursprünglichen Auftraggeber, oder die Beschreibung des ursprünglichen Auftrags, zu dem die Maschinenkomponente gehört. Dadurch können Informationen hinterlegt werden, die einen Ansatzpunkt für eine Rückverfolgung der Maschinenkomponente erlauben. Dies erlaubt es, die durch das Signaturmuster und den Prüfcode gewonnene kryptographische Sicherheit durch Plausibilisierung weiter zu steigern.

Ferner kann der Prüfcode mittels einer Hash-Funktion, auch Falltürfunktion genannt, vorgegeben, also erzeugt, werden. Eine Hash-Funktion ist mathematisch nicht eindeutig umkehrbar und surjektiv. Dementsprechend ist nur mit enormem Aufwand von einem Prüfcode auf das korrespondierende Signaturmuster schließbar. Auch dadurch wird ein unautorisiertes Reproduzieren des beanspruchten Verfahrens weiter erschwert.

In einer weiteren Ausführungsform des beanspruchten Verfahrens wird die zumindest eine Oberfläche, die mit dem Signaturmuster zu versehen ist, zufällig ausgewählt. Dabei wird beispielsweise mittels eines Zufallsgenerator eine zufällige Position des Signaturmusters auf der Oberfläche des Werkstücks ausgewählt. Dies umfasst sowohl ein Auswählen einer Position auf einer bestimmten Oberfläche, beispielsweise einer Stirnfläche oder Mantelfläche, als auch ein Auswählen, welche Oberfläche des Werkstücks mit dem Signaturmuster zu versehen ist. Auch ein intensives Studium von autorisierten Maschinenkomponenten liefert einem unautorisierten Anbieter damit keinen belastbaren Ansatzpunkt, wie das beanspruchte Verfahren imitiert werden könnte. Das beanspruchte Verfahren wird somit um eine aleatorische Komponente verstärkt. Insgesamt wird so die Sicherheit, die durch das beanspruchte Verfahren geboten wird, weiter ausgebaut.

Darüber hinaus kann im beanspruchten Verfahren auch eine Mehrzahl an Oberflächen des Werkstücks ausgewählt werden. Auf diesen Oberflächen ist jeweils zumindest ein Signaturmuster herstellbar. Dadurch wird ein Imitieren einer entsprechend hergestellten Komponente weiter erschwert. Die technischen Vorzüge des beanspruchten Verfahrens werden durch die Verwendung von mehreren Oberflächen mit Signaturmuster weiter ausgebaut. Alternativ oder ergänzend kann auch mindestens ein Attrappen-Signaturmuster auf einer Oberfläche des Werkstücks hergestellt werden. Unter einem Attrappen-Signaturmuster ist ein Signaturmuster zu verstehen, dass für die Überprüfung der Echtheit der Maschinenkomponente funktionslos ist, jedoch in ihrer Gestaltung gattungsgleich mit dem mindestens einen genutzten Signaturmuster ist. Für einen Betrachter sind das genutzte Signaturmuster und ein Attrappen-Signaturmuster nicht ohne Weiteres unterscheidbar. Die Attrappen-Signaturmuster können beispielsweise mittels eines Zufallsgenerators in einfacher Weise erstellt werden. Ein unautorisierter Anbieter, der anstrebt, das beanspruchte Verfahren zu imitieren, wird dadurch mit einer Vielzahl an zu decodierenden Signaturmustern konfrontiert, und somit dessen Aufwand gesteigert.

Beim beanspruchten Verfahren kann der Prüfcode als Zeichenkette, als geometrisches Muster und/oder als sendefähiges Etikett ausgebildet sein. Eine Zeichenkette bzw. ein geometrisches Muster kann durch formgebende Bearbeitung des Werkstücks dauerhaft und manipulationssicher hergestellt werden. Der Prüfcode kann insbesondere in Bereichen des Werkstücks hergestellt werden, die im Betrieb als Maschinenkomponente reduziertem Verschleiß unterworfen sind. Auch nach einer erhöhten Betriebsdauer der Maschinenkomponente ist deren Echtheit weiterhin zuverlässig prüfbar. Sendefähige Etiketten, wie beispielsweise RFID-Etiketten, erlauben es in einfacher und platzsparender Weise, komplexe Prüfcodes dauerhaft zu speichern. Das beanspruchte Verfahren kann folglich an unterschiedliche Einsatzgebiete angepasst werden.

Die zugrundeliegende Aufgabenstellung wird auch durch ein erfindungsgemäßes Verfahren zur Echtheitsprüfung einer Maschinenkomponente gelöst, die mit einem Prüfcode versehen ist. Das Verfahren geht davon aus, dass die Maschinenkomponente bereitgestellt ist und in einem ersten Schritt ein Erfassen eines Prüfcodes erfolgt. Der Prüfcode ist an einer Oberfläche der Maschinenkomponente ausgebildet und ist maschinell, beispielsweise optisch oder elektromagnetisch erfassbar. Es folgt ein zweiter Schritt, in dem der Prüfcode durch einen öffentlichen Schlüssel und/oder öffentlichen Algorithmus entschlüsselt wird. Dadurch ist ermittelbar, wie ein erwartetes Signaturmuster an der Oberfläche der Maschinenkomponenten ausgebildet zu sein hat. Hierzu wird beim Entschlüsseln eine rechnerische Beschreibung des erwarteten Signaturmusters aus dem Prüfcode generiert. Dies umfasst eine geometrische Beschreibung eines Reliefs und/oder einer Welligkeit, als die das Signaturmuster ausgebildet sein kann.

In einem dritten Schritt erfolgt ein Erfassen des Signaturmusters an der Oberfläche der Maschinenkomponente, beispielsweise durch ein optisches Erfassen mittels einer Kamera. Ein vierter Schritt umfasst ein Abgleichen des auf der Oberfläche des Werkstücks erfassten Signaturmusters mit dem erwarteten Signaturmuster, das im dritten Schritt aus dem Prüfcode ermittelt wird. Basierend auf dem Abgleich wird eine Echtheit der Maschinenkomponente erkannt, wenn das erfasste Signaturmuster mit dem erwarteten Signaturmuster übereinstimmt. Eine Unechtheit der Maschinenkomponente wird erkannt, wenn das erfasste Signaturmuster vom erwarteten Signaturmuster abweicht. Das Resultat des Abgleichs wird ferner an einen Benutzer ausgegeben. Der dritte und vierte Schritt können auch dadurch durchgeführt werden, dass für den Prüfcode und/oder das Signaturmuster stellvertretende Werte eingesetzt werden, beispielsweise ein Hash-Wert. Das erfindungsgemäße Verfahren ist schnell durchführbar und erlaubt, zuverlässig eine Echtheit bzw. eine Unechtheit der Maschinenkomponente zu erkennen. Der Prüfcode und das Signaturmuster bleiben auch nach dauerhaftem verschleißbehaftetem Betrieb der Maschinenkomponente erhalten. Das Verfahren erfordert lediglich eine Erfassung des Signaturmusters und des Prüfcodes und kann daher dezentral, also ohne Verbindung zu einer Zentralinstanz, durchgeführt werden. In einer Ausführungsform des beanspruchten Verfahrens kann das Signaturmuster durch ein Herstellungsverfahren gemäß einer der oben skizzierten Ausführungsformen hergestellt sein. Dadurch ist ein erhöhtes Maß an Sicherheit bei der Echtheitsprüfung erreichbar und für Maschinen, die die geprüfte Maschinenkomponente nutzen, die Betriebssicherheit gegen unautorisierte Imitate steigerbar.

Ebenso wird die Aufgabe durch eine erfindungsgemäße Maschinenkomponente gelöst, die eine Oberfläche aufweist, auf der ein Signaturmuster ausgebildet ist. Die Maschinenkomponente ist auch mit einem Prüfcode versehen, der in Verbindung mit dem Signaturmuster zu einer Echtheitsprüfung einsetzbar ist. Erfindungsgemäß ist die Maschinenkomponente nach einem der oben beschriebenen Herstellungsverfahren hergestellt.

Des Weiteren wird die eingangs dargelegte Aufgabenstellung durch ein erfindungsgemäßes Computerprogrammprodukt gelöst. Das Computerprogrammprodukt ist das ausgebildet, Messdaten zu empfangen und auszuwerten und so ein Maß einer Oberfläche eines Werkstücks zu erfassen. Das Computerprogrammprodukt kann beispielsweise dazu ausgebildet sein, Bilddaten einer Kamera zu empfangen und zu verarbeiten. Das Computerprogrammprodukt ist auch dazu ausgebildet, ein Signaturmuster für die Oberfläche des Werkstücks zu ermitteln, also zu erzeugen. Ferner ist das Computerprogrammprodukt dazu ausgebildet, Steuerbefehle für eine Werkzeugmaschine bereitzustellen, mit der das Werkstück zu bearbeiten ist. Erfindungsgemäß ist das Computerprogrammprodukt dazu ausgebildet, zumindest eine Ausführungsform des oben skizzierten Herstellungsverfahrens umzusetzen. Im Rahmen dessen ist das Computerprogrammprodukt zumindest dazu geeignet, ein Signaturmuster zu erzeugen, mit dem das Werkstück zu versehen ist, und Steuerbefehle zu erzeugen, mit denen das Signaturmuster herstellbar ist. Das Computerprogrammprodukt kann mittels einer Recheneinheit und eines Speichers einer Steuereinheit einer Werkzeugmaschine ausführbar. Hierzu kann das Computerprogrammprodukt zumindest teilweise als Software ausgebildet sein und/oder festverdrahtet, also als Chip, Integrierte Schaltung, FPGA oder ähnliches. Das Computerprogrammprodukt kann monolithisch ausgebildet sein, sämtliche seiner Funktionen in sich vereinigen und auf einer Hardwareplattform ausgeführt werden. Alternativ kann das Computerprogrammprodukt auch modular ausgebildet sein und Teilprogramme umfassen, die jeweils einzelne Funktionen getrennt oder in einem kommunikativen Datenaustausch verwirklichen. Dementsprechend ist ein modulares Computerprogrammprodukt auf unterschiedlichen Hardwareplattformen ausführbar, die zumindest vorübergehend miteinander kommunizieren. Dies umfasst beispielsweise auch ein Teilprogramm, das auf einer übergeordneten Steuereinheit außerhalb einer Werkzeugmaschine wie einem Zentralrechner oder einer Computer-Cloud ausgeführt wird, und mit einem anderen Teilprogramm, das in einer Steuereinheit in der Werkzeugmaschine zusammenwirkt.

Darüber hinaus wird die zugrundeliegende Aufgabenstellung durch eine erfindungsgemäße Steuereinheit gelöst, die für eine Verwendung in einer Werkzeugmaschine ausgebildet ist. Die Werkzeugmaschine ist zu einer spanenden Bearbeitung eines Werkstücks ausgebildet, das durch die spanende Bearbeitung zu einer Maschinenkomponente weiterzuverarbeiten ist. Die Steuereinheit ist dazu ausgebildet, die spanende Bearbeitung durch die Werkzeugmaschine zu steuern und ist dazu mit einem Computerprogrammprodukt ausgestattet. Dieses Computerprogrammprodukt ist gemäß einer der oben dargestellten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch ein Werkstück, das in einem Herstellungsverfahren gemäß einer ersten Ausführungsform bearbeitet ist;
- FIG 2: schematisch ein Werkstück, das in einem Herstellungsverfahren gemäß einer zweiten Ausführungsform bearbeitet ist;
- FIG 3: schematisch einen Ablauf einer dritten Ausführungsform des beanspruchten Herstellungsverfahrens;
- FIG 4: schematisch einen Ablauf einer ersten Ausführungsform des beanspruchten Echtheitsprüfverfahrens.

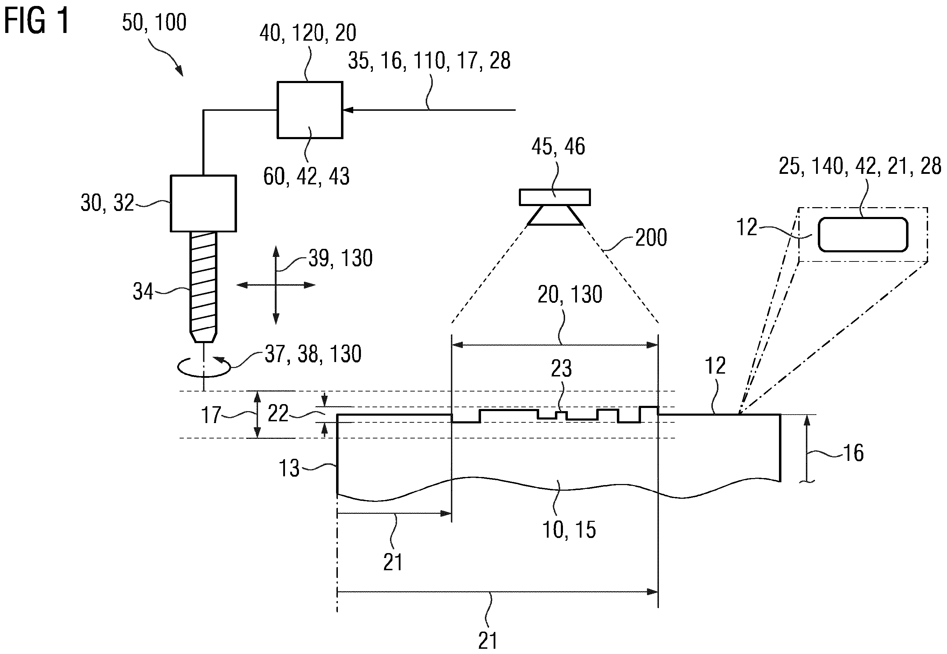

In FIG 1 ist in einer geschnittenen Längsansicht ein Werkstück 10 abgebildet, das mit einer ersten Ausführungsform des beanspruchten Herstellungsverfahrens 100 bearbeitet ist. Das Werkstück 10 ist dadurch zu einer Maschinenkomponente 15 weiterzuverarbeiten. Das Verfahren 100 geht davon aus, dass das Werkstück 10 bereitgestellt ist und durch ein Werkzeug 30 formgebend bearbeitbar ist. Das Werkzeug 30 ist als Fräser 34 ausgebildet, der durch ein Antriebsmittel 32 antreibbar ist, um ein formgebende Bearbeitung 37 durchzuführen. Die formgebende Bearbeitung 37 ist hierbei als spanende Bearbeitung 38 ausgebildet. In einem ersten Schritt 110 des Verfahrens 100 wird ein Datensatz 35 bereitgestellt, der zumindest eine Bemaßung 16 umfasst. Durch die Bemaßung 16 wird die formgebende Bearbeitung 37 des Werkstücks 10 zur Herstellung der Maschinenkomponente 15 hergegeben. Die Bemaßung 16 beschreibt somit ein Endmaß der Maschinenkomponente 15. Der Datensatz 35, durch den die Bemaßung 16 bereitgestellt wird, umfasst auf eine Angabe über eine Toleranzspanne 17 der Bemaßung 16. Die Toleranzspanne 17 ist durch absolute Werte angebbar oder aus einer Angabe einer Toleranzklasse ableitbar. Die Bemaßung 16 und die Toleranzspanne 17 werden einer Steuereinheit 40 einer nicht näher dargestellten Werkzeugmaschine 50 zur Verfügung gestellt, die dazu ausgebildet ist, diese weiterzuverarbeiten. In einem zweiten Schritt 120 erfolgt ein Erzeugen eines Signaturmusters 20, das auf dem Werkstück 10 auszubilden ist und in FIG 1 im Ergebnis dargestellt ist.

Das beanspruchte Verfahren 100 zur Herstellung der Maschinenkomponente 15 umfasst einen dritten Schritt 130, in dem das formgebende Bearbeiten 37 durchgeführt wird, in dem das Signaturmuster 20 hergestellt wird. Das Signaturmuster 20 ist als Relief 23 ausgebildet, das auf der Oberfläche 12 des Werkstück 10 angebracht ist. Das Signaturmuster 20 ist werkstückindividuell oder chargenindividuell und ist maschinell auslesbar bzw. erfassbar. Das Relief 23 wird durch eine Fertigungsbewegung 39 des Fräser 34 während des dritten Schritts 130 hergestellt. Ferner ist das Relief 23 in FIG 1 mit einem Erfassungsmittel 45 erfassbar, das als Kamera 46 ausgebildet ist, um so ein nicht näher dargestelltes Echtheitsprüfungsverfahren 200 durchzuführen. Des Weiteren umfasst das Verfahren 100 zur Herstellung der Maschinenkomponente 15 einen vierten Schritt 140, in dem an der Oberfläche 12 des Werkstück 10 ein Prüfcode 25 hergestellt wird. Der Prüfcode 25 ist analog zum Signaturmuster 20 auch maschinell auslesbar bzw. erfassbar. Das Erfassungsmittel 45 ist dazu ausgebildet, den Prüfcode 25 zu erfassen. Der Prüfcode 25 wird im vierten Schritt 140 basierend auf dem Signaturmuster 20 mittels eines privaten Schlüssels 42 und eines privaten Algorithmus 43 erzeugt und bildet das Signaturmuster 20 somit in verschlüsselter Form ab. Ebenso umfasst der Prüfcode 25 eine Information über die Position 21 des Signaturmusters 20, die in FIG 1 relativ zu einer Bezugskante 13 dargestellt ist, die auch verschlüsselt ist. Ebenso umfasst der Prüfcode 25 zumindest eine einstellbare Zusatzinformation 28 auf, die zusammen mit dem Datensatz 35 durch eine Benutzereingabe vorgebbar ist und gleichermaßen im Prüfcode 25 verschlüsselt ist. Die Zusatzinformation 28 erlaubt es beispielsweise durch Angabe eines Herstellers, eines Herstellungsdatums, eines Herstellungsorts, eines ursprünglichen Auftraggebers, oder einer Beschreibung des ursprünglichen Auftrags, zu dem die Maschinenkomponente gehört, deren Echtheit weiter zu verifizieren.

Das als Relief 23 ausgebildete Signaturmuster 20 weist Maximalabmessungen 22 auf, die die höchsten und tiefsten Bereiche des Reliefs 23 beschreiben. Die Maximalabmessungen 22 sind in die gleiche Richtung ausgerichtet wie die Bemaßung 16 und deren Toleranzspanne 17. Das Signaturmuster 20 wird durch seine Maximalabmessungen 22 entlang der Richtung der Bemaßung 16 eingehüllt. Gemäß dem beanspruchten Verfahren 100 weist das Signaturmuster 20 Maximalabmessungen 22 auf, die innerhalb der Toleranzspanne 17 liegen. Dadurch erfolgt keine für das weitere Betriebsverhalten oder Montageverhalten der Maschinenkomponente 15 erhebliche Veränderung an der Oberfläche 12. Infolgedessen weist das Signaturmuster 20 geringe Abmessungen auf und ist ohne vorherige Kenntnis hiervon durch einen unautorisierten Anbieter nicht ohne Weiteres zu entdecken. Die zur Herstellung des Signaturmusters 20 notwendige Fertigungspräzision wird von heutigen Werkzeugmaschinen 50 typischerweise bereitgestellt. Die Herstellung des Signaturmuster 20 ist somit mit Fähigkeiten der Werkzeugmaschine 50 möglich, die ohnehin vorhanden sind. Das Signaturmuster 20 ist folglich in einfacher Weise herstellbar und auch über eine erhöhte Betriebsdauer der Maschinenkomponente 15 beständig. Zur Durchführung des Verfahrens 100 zur Herstellung der Maschinenkomponente 15 aus dem Werkstück 10 ist die Steuereinheit 40 mit einem entsprechend ausgebildeten Computerprogrammprodukt 60 ausgestattet.

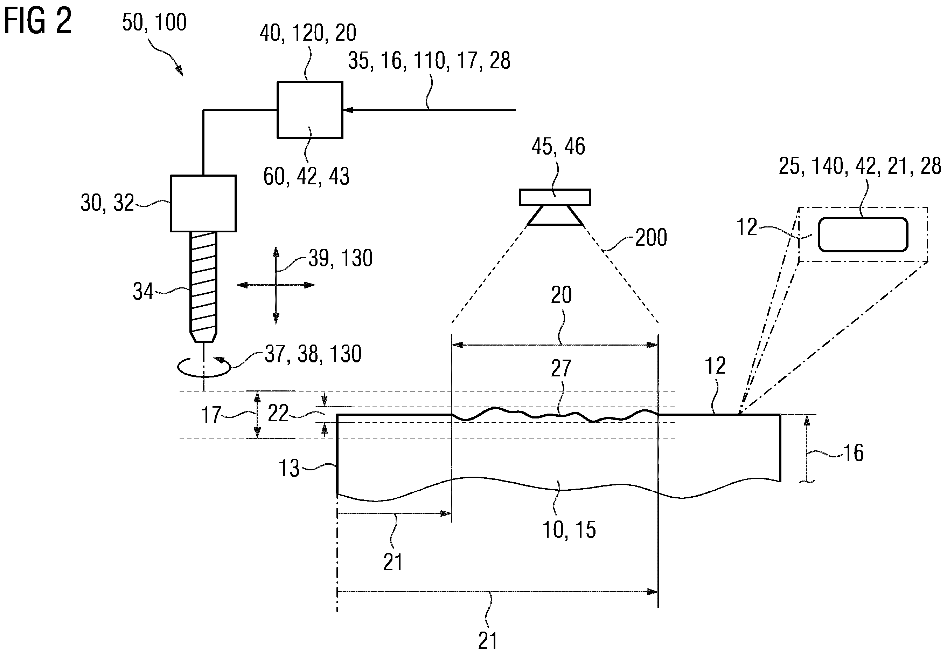

In FIG 2 ist in einer geschnittenen Längsansicht ein Werkstück 10 abgebildet, das mit einer zweiten Ausführungsform des beanspruchten Herstellungsverfahrens 100 bearbeitet ist. Das Werkstück 10 ist dadurch zu einer Maschinenkomponente 15 weiterzuverarbeiten. Das Verfahren 100 geht davon aus, dass das Werkstück 10 bereitgestellt ist und durch ein Werkzeug 30 formgebend bearbeitbar ist. Das Werkzeug 30 ist als Fräser 34 ausgebildet, der durch ein Antriebsmittel 32 antreibbar ist, um ein formgebende Bearbeitung 37 durchzuführen. Die formgebende Bearbeitung 37 ist hierbei als spanende Bearbeitung 38 ausgebildet. In einem ersten Schritt 110 des Verfahrens 100 wird ein Datensatz 35 bereitgestellt, der zumindest eine Bemaßung 16 umfasst. Durch die Bemaßung 16 wird die formgebende Bearbeitung 37 des Werkstücks 10 zur Herstellung der Maschinenkomponente 15 hergegeben. Die Bemaßung 16 beschreibt somit ein Endmaß der Maschinenkomponente 15. Der Datensatz 35, durch den die Bemaßung 16 bereitgestellt wird, umfasst auf eine Angabe über eine Toleranzspanne 17 der Bemaßung 16. Die Toleranzspanne 17 ist durch absolute Werte angebbar oder aus einer Angabe einer Toleranzklasse ableitbar. Die Bemaßung 16 und die Toleranzspanne 17 werden einer Steuereinheit 40 einer nicht näher dargestellten Werkzeugmaschine 50 zur Verfügung gestellt, die dazu ausgebildet ist, diese weiterzuverarbeiten. In einem zweiten Schritt 120 erfolgt ein Erzeugen eines Signaturmusters 20, das auf dem Werkstück 10 auszubilden ist und in FIG 2 im Ergebnis dargestellt ist.

Das beanspruchte Verfahren 100 zur Herstellung der Maschinenkomponente 15 umfasst einen dritten Schritt 130, in dem das formgebende Bearbeiten 37 durchgeführt wird, in dem das Signaturmuster 20 hergestellt wird. Das Signaturmuster 20 ist als Welligkeit 27 ausgebildet, die auf der Oberfläche 12 des Werkstück 10 angebracht ist. Das Signaturmuster 20 ist werkstückindividuell oder chargenindividuell und ist maschinell auslesbar bzw. erfassbar. Die Welligkeit 27 wird durch eine Fertigungsbewegung 39 des Fräser 34 während des dritten Schritts 130 hergestellt. Ferner ist die Welligkeit 27 in FIG 2 mit einem Erfassungsmittel 45 erfassbar, das als Kamera 46 ausgebildet ist, um so ein nicht näher dargestelltes Echtheitsprüfungsverfahren 200 durchzuführen. Des Weiteren umfasst das Verfahren 100 zur Herstellung der Maschinenkomponente 15 einen vierten Schritt 140, in dem an der Oberfläche 12 des Werkstück 10 ein Prüfcode 25 hergestellt wird. Der Prüfcode 25 ist analog zum Signaturmuster 20 auch maschinell auslesbar bzw. erfassbar. Das Erfassungsmittel 45 ist dazu ausgebildet, den Prüfcode 25 zu erfassen. Der Prüfcode 25 wird im vierten Schritt 140 basierend auf dem Signaturmuster 20 mittels eines privaten Schlüssels 42 und eines privaten Algorithmus 43 erzeugt und bildet das Signaturmuster 20 somit in verschlüsselter Form ab. Ebenso umfasst der Prüfcode 25 eine Information über die Position 21 des Signaturmusters 20, die in FIG 1 relativ zu einer Bezugskante 13 dargestellt ist, die auch verschlüsselt ist. Ebenso umfasst der Prüfcode 25 zumindest eine einstellbare Zusatzinformation 28 auf, die zusammen mit dem Datensatz 35 durch eine Benutzereingabe vorgebbar ist und gleichermaßen im Prüfcode 25 verschlüsselt ist. Die Zusatzinformation 28 erlaubt es beispielsweise durch Angabe eines Herstellers, eines Herstellungsdatums, eines Herstellungsorts, eines ursprünglichen Auftraggebers, oder einer Beschreibung des ursprünglichen Auftrags, zu dem die Maschinenkomponente gehört, deren Echtheit weiter zu verifizieren.

Das als Welligkeit 27 ausgebildete Signaturmuster 20 weist Maximalabmessungen 22 auf, die die höchsten und tiefsten Bereiche der Welligkeit 27 beschreiben. Die Maximalabmessungen 22 sind in die gleiche Richtung ausgerichtet wie die Bemaßung 16 und deren Toleranzspanne 17. Das Signaturmuster 20 wird durch seine Maximalabmessungen 22 entlang der Richtung der Bemaßung 16 eingehüllt. Gemäß dem beanspruchten Verfahren 100 weist das Signaturmuster 20 Maximalabmessungen 22 auf, die innerhalb der Toleranzspanne 17 liegen. Dadurch erfolgt keine für das weitere Betriebsverhalten oder Montageverhalten der Maschinenkomponente 15 erhebliche Veränderung an der Oberfläche 12. Infolgedessen weist das Signaturmuster 20 geringe Abmessungen auf und ist ohne vorherige Kenntnis hiervon durch einen unautorisierten Anbieter nicht ohne Weiteres zu entdecken. Insbesondere ist die Welligkeit 27 höchsten mit besonderem Aufwand von einer sich selbst einstellenden Welligkeit an der Oberfläche 12 des Werkstücks 10 bzw. der Maschinenkomponente 15 unterscheidbar. Die Welligkeit 27 verwirklicht damit eine steganographische Komponente, die die Fälschungssicherheit für die Maschinenkomponente 15 erhöht. Die zur Herstellung des Signaturmusters 20 notwendige Fertigungspräzision wird von heutigen Werkzeugmaschinen 50 typischerweise bereitgestellt. Die Herstellung des Signaturmuster 20 ist somit mit Fähigkeiten der Werkzeugmaschine 50 möglich, die ohnehin vorhanden sind. Das Signaturmuster 20 ist folglich in einfacher Weise herstellbar und auch über eine erhöhte Betriebsdauer der Maschinenkomponente 15 beständig. Zur Durchführung des Verfahrens 100 zur Herstellung der Maschinenkomponente 15 aus dem Werkstück 10 ist die Steuereinheit 40 mit einem entsprechend ausgebildeten Computerprogrammprodukt 60 ausgestattet.

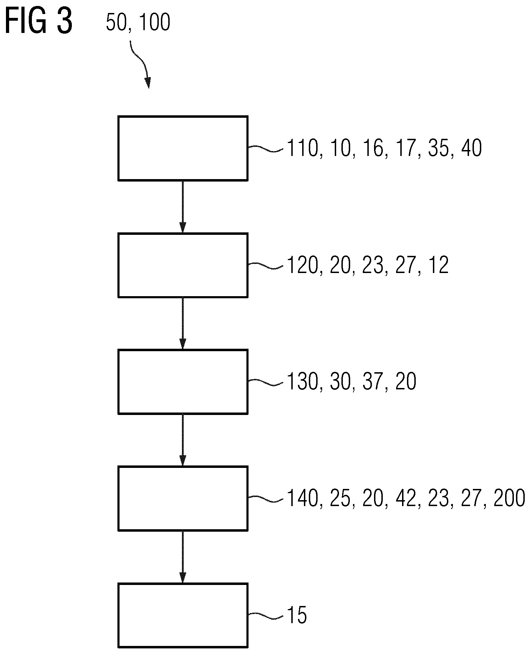

FIG 3 zeigt den Ablauf einer dritten Ausführungsform des beanspruchten Verfahrens 100 zum Herstellen einer Maschinenkomponente 15 aus einem Werkstück 10. Das Verfahren 100 geht davon aus, dass das Werkstück 10 durch eine Werkzeugmaschine 50 bearbeitbar bereitgestellt ist. In einem ersten Schritt 110 wird durch einen Datensatz 35 eine Bemaßung 16 des Werkstücks 10 bzw. der herzustellenden Maschinenkomponente 15 bereitgestellt. Mit der Bemaßung 16 wird auch deren Toleranzspanne 17 bereitgestellt. Die Toleranzspanne 17 und die Bemaßung 16 werden in weiterverarbeitbarer Form einer Steuereinheit 40 der Werkzeugmaschine 50 zur Verfügung gestellt. Es folgt ein zweiter Schritt 120, in dem ein Signaturmuster 20 erzeugt wird, das als Relief 23 und/oder als Welligkeit 27 an einer zu bearbeitenden Oberfläche 12 des Werkstücks 10 ausgebildet ist. Das Signaturmuster 20 ist werkstückindividuell oder chargenindividuell und ist maschinell erfassbar, also auslesbar. In einem darauffolgenden dritten Schritt 130 erfolgt ein formgebendes Bearbeiten 37 des Werkstücks 10 mit einem Werkzeug 30 der Werkzeugmaschine 50. Dabei wird zumindest an der zu bearbeitenden Oberfläche 12 des Werkstücks 10 das Signaturmuster 20 hergestellt. Das Signaturmuster 20 weist Maximalabmessungen 22 auf, die innerhalb der Toleranzspanne 17 liegen, so dass eine Funktionstauglichkeit der Maschinenkomponente 15 durch das Signaturmuster 20 nicht beeinflusst wird. In einem vierten Schritt 140 erfolgt ein Herstellen eines Prüfcodes 25, der basierend auf dem Signaturmuster 20 ermittelt wird. Zum Erzeugen des Prüfcodes 25 werden Angaben, die das Signaturmuster 20 beispielsweise als Relief 23 und/oder Welligkeit 27 beschreiben, mittels eines privaten Schlüssels 42 verschlüsselt. Der Prüfcode 25 ist maschinell erfassbar, also auslesbar, und in einem nicht gezeigten Echtheitsprüfverfahren 200 mit dem Signaturmuster 20 abgleichbar. Dadurch ist die Echtheit der Maschinenkomponente 15 verifizierbar bzw. falsifizierbar.

Nach Abschluss des vierten Schritts 140 liegt das bearbeitete Werkstück 10 als Maschinenkomponente 15 vor, die aus der Werkzeugmaschine 50 entnehmbar ist.

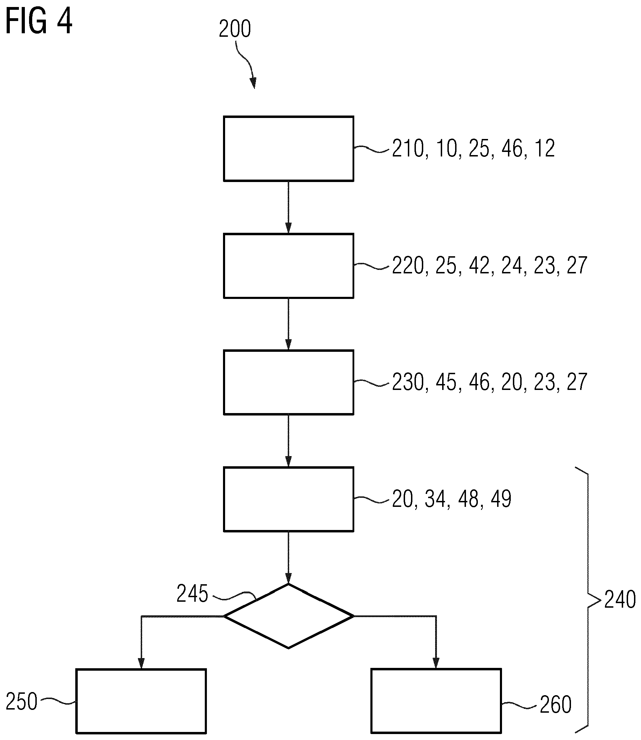

In FIG 4 ist der Ablauf einer Verfahrens 200 zum Prüfen einer Echtheit einer Maschinenkomponente 15 in einer ersten Ausführungsform dargestellt. Das Verfahren 200 geht von einer Maschinenkomponente 15 aus, die aus einem Werkstück 10 hergestellt ist und die mittels zumindest eines Erfassungsmittels 45 erfassbar ist. In einem ersten Schritt 210 wird durch das Erfassungsmittel 45 ein Prüfcode 25 erfasst, der an einer Oberfläche 12 der Maschinenkomponente 15 ausgebildet ist. Es folgt ein zweiter Schritt 220, in dem der Prüfcode 25 entschlüsselt wird und ein erwartetes Signaturmuster 24 durch das Entschlüsseln erzeugt wird. Zum Entschlüsseln wird auf den erfassten Prüfcode 25 ein privater Schlüssel 42 angewandt und so Daten gewonnen, die beispielsweise ein Relief 23 und/oder eine Welligkeit 27 rechnerisch beschreiben. Es erfolgt ein dritter Schritt 230, in dem beispielsweise mittels des Erfassungsmittels 45 ein Signaturmuster 20 erfasst wird, das auf der Oberfläche 12 der Maschinenkomponente 15 ausgebildet ist. Dazu kann das Erfassungsmittel 45 beispielsweise als Kamera 46 ausgebildet sein. Durch das Erfassen werden Daten erzeugt, die das auf der Oberfläche 12 ausgebildete Signaturmuster 20 in Form eines Reliefs 23 und/oder einer Welligkeit 27 rechnerische beschreiben. Daran schließt sich ein vierter Schritt 240 an, in dem das erfasste Signaturmuster 20 mit dem erwarteten Signaturmuster 24 verglichen wird. Der so durchgeführte Abgleich 48 kann unter Berücksichtigung eines einstellbaren tolerierbaren Abweichungsrahmens 49 durchgeführt werden. Durch den Abgleich 48 ergibt sich im vierten Schritt 140 eine Verzweigung 245. Wenn durch den Abgleich ermittelt wird, dass das erwartete Signaturmuster 20 mit dem erfassten Signaturmuster 24 übereinstimmt, wird eine Echtheit 250 der Maschinenkomponente 15 erkannt. Wenn durch den Abgleich 48 ermittelt wird, dass das erwartete Signaturmuster 24 vom erfassten Signaturmuster 20 abweicht, wird eine Unechtheit 260 der Maschinenkomponente 15 erkannt. Das Resultat des Abgleichs 48 wird abschließend an einen Benutzer ausgegeben.

## Patentansprüche

1. Verfahren (100) zum Herstellen einer Maschinenkomponente (15) aus einem Werkstück (10), umfassend die Schritte:
a) Erfassen einer Bemaßung (16) einer zu bearbeitenden Oberfläche (12) des Werkstücks (10) und einer Toleranzspanne (17) der Bemaßung (16);
b) Erzeugen eines Signaturmusters (20) für die zu bearbeitende Oberfläche (12);
c) Formgebendes Bearbeiten (37) des Werkstücks (10) zumindest an der zu bearbeitenden Oberfläche (12), wobei das Signaturmuster (20) hergestellt wird;
d) Herstellen eines vom Signaturmuster (20) separaten Prüfcodes (25) auf dem Werkstück (10);
wobei das Signaturmuster (20) Maximalabmessungen (22) aufweist, die innerhalb der Toleranzspanne (17) liegen, **dad urch gekennzeichnet** , dass das Signaturmuster (20) als Welligkeit (27) an der Oberfläche (12) des Werkstücks (10) ausgebildet ist und der Prüfcode (25) in Abhängigkeit vom Signaturmuster (20) ausgebildet ist.

2. Verfahren (100) nach Anspruch 1, **dadurch ge-kennzeichnet**, dass das formgebende Bearbeiten (37) als spanendes Bearbeiten (38) ausgebildet ist.

3. Verfahren (100) nach Anspruch 2, **dadurch ge-kennzeichnet,** dass der Prüfcode (25) zumindest teilweise basierend auf dem Signaturmuster (20) und einem privaten Schlüssel (42) und/oder einem privaten Algorithmus (43) vorgegeben wird.

4. Verfahren (100) nach Anspruch 2, **dadurch gekennzeichnet, dass** der Prüfcode (25) mittels des privaten Schlüssels (42) und des privaten Algorithmus (43) erzeugt wird und das Signaturmuster (20) in verschlüsselter Form abbildet, wobei der Prüfcode (25) auch eine verschlüsselte Information über eine Position (21) des Signaturmusters (20) umfasst.

5. Verfahren (100) nach einem der Ansprüche 1 bis 4, **dadurch gekennzeichnet, dass** das Signaturmuster (20) auch ein diskretes Relief (23) an der Oberfläche des Werkstücks (10) umfasst.

6. Verfahren (100) nach einem der Ansprüche 3, 4 oder 5, **d adurch gekennzeichnet** , dass der Prüfcode (25) basierend auf einer einstellbaren Zusatzinformation (28) erzeugt wird.

7. Verfahren (100) nach einem der Ansprüche 1 bis 6, **da-durch gekennzeichnet**, dass der Prüfcode (25) mittels einer Hash-Funktion vorgegeben wird.

8. Verfahren (100) nach einem der Ansprüche 1 bis 7, **da-durch gekennzeichnet** , dass die zumindest eine Oberfläche (12), die mit dem Signaturmuster (20) zu versehen ist, zufällig ausgewählt wird.

9. Verfahren (100) nach einem der Ansprüche 1 bis 8, **da-durch gekennzeichnet** , dass an einer Mehrzahl an Oberflächen (12) des Werkstücks (10) jeweils zumindest ein Signaturmuster (20) hergestellt wird.

10. Verfahren (100) nach einem der Ansprüche 1 bis 9, **da-durch gekennzeichnet** , dass der Prüfcode (25) als Zeichenkette, als geometrisches Muster und/oder als sendefähiges Etikett ausgebildet ist.

11. Verfahren (100) nach einem der Ansprüche 1 bis 10, **da-durch gekennzeichnet** , dass auch mindestens ein Attrappen-Signaturmuster auf der Oberfläche (12) des Werkstücks (10) hergestellt wird.

12. Verfahren (200) zur Echtheitsprüfung einer Maschinenkomponente (15), die mit einem Prüfcode (25) versehen ist, umfassend die Schritte:
a) Erfassen des Prüfcodes (25), der an einer Oberfläche (12) der Maschinenkomponente (15) ausgebildet ist;
b) Entschlüsseln des Prüfcodes (25) und Ermitteln eines erwarteten Signaturmusters (24);
c) Erfassen eines Signaturmusters (20), das an der Oberfläche (12) der Maschinenkomponente (15) ausgebildet ist;
d) Erkennen der Echtheit (250) der Maschinenkomponente (15), wenn das erfasste Signaturmuster (20) mit dem erwarteten Signaturmuster (24) übereinstimmt, oder Erkennen einer Unechtheit (260) der Maschinenkomponente (15), wenn das erfasste Signaturmuster (20) vom erwarteten Signaturmuster (24) abweicht,
**dadurch gekennzeichnet, dass** das Signaturmuster (20) durch ein Verfahren (100) nach einem der Ansprüche 1 bis 11 hergestellt ist.

13. Maschinenkomponente (15), umfassend zumindest eine Oberfläche (12), auf der ein Signaturmuster (20) ausgebildet ist, und die mit einem Prüfcode (25) versehen ist, **dadurch gekennzeichnet, dass** das Signaturmuster (20) mittels eines Verfahrens (100) nach einem der Ansprüche 1 bis 11 hergestellt ist.

14. Computerprogrammprodukt (60) zum Erfassen einer Bemaßung (16) an einer Oberfläche (12) eines Werkstücks (10) und zum Ermitteln eines Signaturmusters (20) für ein Verfahren (100) zum Herstellen einer Maschinenkomponente (15) aus dem Werkstück (10), **dadurch gekennzeichnet , dass** das Verfahren (100) nach einem der Ansprüche 1 bis 11 ausgebildet ist.

15. Steuereinheit (40) für eine Werkzeugmaschine (50), die zu einer spanenden Bearbeitung (38) eines Werkstücks (10) zu einer Maschinenkomponente (15) ausgebildet ist, wobei die Steuereinheit (40) zu einem Steuern der spanenden Bearbeitung (38) mit einem Computerprogrammprodukt (60) versehen ist, **dadurch gekennzeichnet , dass** das Computerprogrammprodukt (60) nach Anspruch 14 ausgebildet ist.

## Claims

1. Method (100) for producing a machine component (15) from a workpiece (10), comprising the steps:
a) registering a dimensioning (16) of a surface (12) of the workpiece (10) to be machined and a margin of tolerance (17) of the dimensioning (16);
b) generating a signature pattern (20) for the surface (12) to be machined;
c) shape-giving machining (37) of the workpiece (10) at least on the surface (12) to be machined, wherein the signature pattern (20) is produced;
d) producing a check code (25), which is separate from the signature pattern (20), on the workpiece (10);
wherein the signature pattern (20) has maximum dimensions (22), which lie within the margin of tolerance (17),
**characterised in that** the signature pattern (20) is embodied as a wave texture (27) on the surface (12) of the workpiece (10) and the check code (25) is embodied as a function of the signature pattern (20).

2. Method (100) according to claim 1, **characterised in that** the shape-giving machining (37) is embodied as cutting (38).

3. Method (100) according to claim 2, **characterised in that** the check code (25) is specified at least partially on the basis of the signature pattern (20) and a private key (42) and/or a private algorithm (43).

4. Method (100) according to claim 2, **characterised in that** the check code (25) is generated by means of the private key (42) and the private algorithm (43) and depicts the signature pattern (20) in encrypted form, wherein the check code (25) also comprises encrypted information about a position (21) of the signature pattern (20).

5. Method (100) according to one of claims 1 to 4,
**characterised in that** the signature pattern (20) also comprises a discrete relief (23) on the surface of the workpiece (10).

6. Method (100) according to one of claims 3, 4 or 5,
**characterised in that** the check code (25) is generated on the basis of an adjustable item of additional information (28).

7. Method (100) according to one of claims 1 to 6,
**characterised in that** the check code (25) is specified by means of a hash function.

8. Method (100) according to one of claims 1 to 7,
**characterised in that** the at least one surface (12), which is to be provided with the signature pattern (20), is randomly selected.

9. Method (100) according to one of claims 1 to 8,
**characterised in that** at least one signature pattern (20) respectively is produced on a plurality of surfaces (12) of the workpiece (10).

10. Method (100) according to one of claims 1 to 9,
**characterised in that** the check code (25) is embodied as a character string, as a geometric pattern and/or as a transmissible tag.

11. Method (100) according to one of claims 1 to 10,
**characterised in that** at least one dummy signature pattern is also produced on the surface (12) of the workpiece (10).

12. Method (200) for checking the authenticity of a machine component (15), which is provided with a check code (25), comprising the steps:
a) registering the check code (25), which is embodied on a surface (12) of the machine component (15);
b) decrypting the check code (25) and ascertaining an expected signature pattern (24);
c) registering a signature pattern (20), which is embodied on the surface (12) of the machine component (15);
d) identifying the authenticity (250) of the machine component (15) if the registered signature pattern (20) matches the expected signature pattern (24), or identifying inauthenticity (260) of the machine component (15) if the registered signature pattern (20) deviates from the expected signature pattern (24),
**characterised in that** the signature pattern (20) is produced by a method (100) according to one of claims 1 to 11.

13. Machine component (15), comprising at least one surface (12), on which a signature pattern (20) is embodied and which is provided with a check code (25), **characterised in that** the signature pattern (20) is produced by means of a method (100) according to one of claims 1 to 11.

14. Computer program product (60) for registering a dimensioning (16) on a surface (12) of a workpiece (10) and for ascertaining a signature pattern (20) for a method (100) for producing a machine component (15) from the workpiece (10), **characterised in that** the method (100) is embodied according to one of claims 1 to 11.

15. Control unit (40) for a machine tool (50), which is embodied for cutting (38) a workpiece (10) to form a machine component (15), wherein for controlling the cutting (38), the control unit (40) is provided with a computer program product (60), **characterised in that** the computer program product (60) is embodied according to claim 14.

## Revendications

1. Procédé (100) de fabrication d'un composant (15) de machine à partir d'une pièce (10), comprenant les stades :
a) détection d'une cotation (16) d'une surface (12) à usiner de la pièce (10) et d'une plage (17) de tolérance de la cotation (16) ;
b) production d'un motif (20) de signature pour la surface (12) à usiner ;
c) usinage (37) donnant la forme de la pièce (10) au moins sur la surface (12) à usiner, le motif (20) de signature étant produit ;
d) production sur la pièce (10) d'un code (25) de contrôle distinct du motif (20) de signature ;
dans lequel le motif (20) de signature a des dimensions (22) maximum, qui sont dans la plage (17) de tolérance, **caractérisé en ce que** le motif (20) de signature est constitué sous la forme d'une ondulation (27) à la surface (12) de la pièce (10) et le code (25) de contrôle est constitué en fonction du motif (20) de signature.

2. Procédé (100) suivant la revendication 1, **caractérisé en ce que** l'usinage (37) donnant la forme est constitué sous la forme d'un usinage (38) avec enlèvement de copeaux.

3. Procédé (100) suivant la revendication 2, **caractérisé en ce que** l'on prescrit le code (25) de contrôle au moins en partie sur la base du motif (20) de signature et d'une clé (42) privée et/ou d'un algorithme (43) privé.

4. Procédé (100) suivant la revendication 2, **caractérisé en ce que** le code (25) de contrôle est produit au moyen de la clé (42) privée et de l'algorithme (43) privé et reproduit le motif (20) de signature sous forme chiffrée, dans lequel le code (25) de contrôle comprend aussi une information chiffrée sur une position (21) du motif (20) de signature.

5. Procédé (100) suivant l'une des revendications 1 à 4, **caractérisé en ce que** le motif (20) de signature comprend également un relief (23) discret à la surface de la pièce (10).

6. Procédé (100) suivant l'une des revendications 3, 4 ou 5, **caractérisé en ce que** l'on produit le code (25) de contrôle sur la base d'une information (28) supplémentaire réglable.

7. Procédé (100) suivant l'une des revendications 1 à 6, **caractérisé en ce que** l'on prescrit le code (25) de contrôle au moyen d'une fonction Hash.

8. Procédé (100) suivant l'une des revendications 1 à 7, **caractérisé en ce que** l'on choisit au hasard la au moins une surface (12), qui est pourvue du motif (20) de signature.

9. Procédé (100) suivant l'une des revendications 1 à 8, **caractérisé en ce que** l'on produit respectivement au moins un motif (20) de signature sur une pluralité de surfaces (12) de la pièce (10).

10. Procédé (100) suivant l'une des revendications 1 à 9, **caractérisé en ce que** le code (25) de contrôle est constitué sous la forme d'une chaîne de lettres, d'un motif géométrique et/ou d'une étiquette apte à être envoyée.

11. Procédé (100) suivant l'une des revendications 1 à 10, **caractérisé en ce que** l'on produit également au moins un motif de signature factice sur la surface (12) de la pièce (10).

12. Procédé (200) de contrôle en temps réel d'un composant (15) de machine, qui est pourvu d'un code (25) de contrôle, comprenant les stades :
a) détection du code (25) de contrôle, qui est constitué sur une surface (12) du composant (15) de machine ;
b) déchiffrement du code (25) de contrôle et détermination d'un motif (24) de signature escompté ;
c) détection d'un motif (20) de signature, qui est constitué à la surface (12) du composant (15) de machine ;
d) reconnaissance de l'authenticité (250) du composant (15) de machine, si le motif (20) de signature détecté coïncide avec le motif (24) de signature escompté, ou reconnaissance d'une inauthenticité (260) du composant (15) de machine, si le motif (20) de signature détecté s'écarte du motif (24) de signature escompté,
**caractérisé en ce que** le motif (20) de signature est produit par un procédé (100) suivant l'une des revendications 1 à 11.

13. Composant (15) de machine, comprenant au moins une surface (12), sur laquelle est constitué un motif (20) de signature et qui est pourvu d'un code (25) de contrôle, **caractérisé en ce que** le motif (20) de signature est produit au moyen d'un procédé (100) suivant l'une des revendications 1 à 11.

14. Produit (60) de programme d'ordinateur pour la détection d'une cotation (16) sur une surface (12) d'une pièce (10) et pour la détermination d'un motif (20) de signature pour un procédé (100) de fabrication d'un composant (15) de machine à partir de la pièce (10), **caractérisé en ce que** le procédé (100) est constitué suivant l'une des revendications 1 à 11.

15. Unité (40) de commande d'une machine (50) outil, qui est constituée pour un usinage (38) avec enlèvement de copeaux d'une pièce (10) en un composant (15) de machine, dans laquelle l'unité (40) de commande est, pour une commande de l'usinage (38) avec enlèvement de copeaux, pourvue d'un produit (60) de programme d'ordinateur, **caractérisée en ce que** le produit (60) de programme d'ordinateur est constitué suivant la revendication 14.
